(19) Europäisches Patentamt / European Patent Office / Office européen des brevets

(11) **EP 3 808 795 A1**

(12) **EUROPEAN PATENT APPLICATION**
published in accordance with Art. 153(4) EPC

(43) Date of publication:
**21.04.2021 Bulletin 2021/16**

(21) Application number: **19820035.4**

(22) Date of filing: **04.06.2019**

(51) Int Cl.:
***C08J 3/14*** *(2006.01)*

(86) International application number:
**PCT/JP2019/022192**

(87) International publication number:
**WO 2019/239965 (19.12.2019 Gazette 2019/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.06.2018 JP 2018113421**

(71) Applicant: **Nippon Soda Co., Ltd.**
**Tokyo 100-8165 (JP)**

(72) Inventor: **FUKAWA, Naohiro**
**Ichihara-shi, Chiba 290-0045 (JP)**

(74) Representative: **Mewburn Ellis LLP**
**Aurora Building**
**Counterslip**
**Bristol BS1 6BX (GB)**

(54) **METHOD FOR PRODUCING POLYAMIDE 4 PARTICLES**

(57)    The present invention aims to provide a new method for producing polyamide 4 particles. The method for producing polyamide 4 particles of the present invention comprises mixing an emulsified liquid (D) obtained by mixing a solution (B) obtained by dissolving polyamide 4 in a good solvent (A) for polyamide 4 and a solvent (C) which is incompatible with the solution (B), and a solvent (E) which is a poor solvent for polyamide 4 and is compatible with the good solvent (A) and the solvent (C). The above emulsified liquid (D) may further comprise a surfactant, and the volume average diameter of the obtained polyamide 4 particles is usually in the range of 10 $\mu$m to 500 $\mu$m.

EP 3 808 795 A1

## Description

### Technical Field

The present invention relates to a method for producing polyamide 4 particles. The present application claims priority to Japanese Patent Application No. 2018-113421 filed on June 14, 2018, the contents of which are incorporated herein by reference.

### Background Art

The polyamide 4 particles are expected to be applied to cosmetics, adsorbents, catalyst carriers, or the like. Patent document 1 describes a method for producing polyamide particles, characterized by melting or dissolving a raw material mixture containing 2-pyrrolidone and/or 2-azetidinone, which are monomers for polymerization, and a basic polymerization catalyst, by contacting the raw material mixture with a compressive fluid containing carbon dioxide having a density of 450 $kg/m^3$ or more, and then performing ring-opening polymerization of the monomers for polymerization. According to the method of patent document 1, it seems to be possible to manufacture porous polyamide particles having a d50 diameter of 10 $\mu$m or more and 1000 $\mu$m or less and a dispersity of 3.0 or less.

Patent document 2 describes a method of polymerizing $\alpha$-pyrrolidone in a saturated hydrocarbon in the presence of a higher fatty acid alkali salt in addition to a polymerization initiator and a catalyst. According to the method of patent document 2, it seems that uniform polymer particles having a diameter of about 0.05 to 2.0 mm may be manufactured.

Patent document 3 describes a method for producing a powdery 2-pyrrolidone polymer in which 0.1 to 5% by weight of the compound represented by the chemical formula (1) with respect to 2-pyrrolidone is present when 2-pyrrolidone is subjected to suspension polymerization in an aprotic solvent by the action of a basic polymerization catalyst and carbon dioxide or sulfur dioxide as a polymerization initiator.

$$(RCOO) \, 1/2M \qquad (1)$$

(wherein R represents a hydrocarbon group having 10 to 30 carbon atoms, and M represents a divalent metal)

Patent document 4 describes a method for producing thermoplastic polymer fine particles by conducting in sequence (a) a first step of dissolving a thermoplastic polymer in an organic solvent to obtain a polymer solution, (b) a second step of emulsifying the polymer solution (a) from a water-in-oil emulsion to an oil-in-water emulsion by adding a portion of water containing a surfactant to the polymer solution (a) while mixing under stirring power $P_0$, (c) a third step of dropping the stirring power of the emulsified liquid (b) to 50% or less after adding the entire amount of the water containing a surfactant, and (d) a fourth step of adding the emulsified liquid (c) to a poor solvent to precipitate polymer fine particles, and then separating and collecting the thermoplastic polymer fine particles.

### Prior Art Documents

### Patent Documents

Patent document 1: Japanese unexamined Patent Application Publication No. 2016-186068
Patent document 2: Japanese Patent Publication No. 37-6746
Patent document 3: Japanese unexamined Patent Application Publication No. 5-39355
Patent document 4: Japanese unexamined Patent Application Publication No. 2015-174871

### Summary of the Invention

### Object to be Solved by the Invention

The present invention aims to provide a new method for producing polyamide 4 particles.

### Means to Solve the Object

A method for producing polyamide 4 particles comprising: mixing an emulsified liquid (D) obtained by mixing a solution (B) obtained by dissolving polyamide 4 in a good solvent (A) for polyamide 4 and a solvent (C) which is incompatible with the solution (B), with a solvent (E) which is a poor solvent for polyamide 4 and is compatible with the good solvent (A) and the solvent (C) has been found and the present invention has been completed.

That is, the present invention relates to the following inventions.

(1) A method for producing polyamide 4 particles comprising: mixing an emulsified liquid (D) obtained by mixing a solution (B) obtained by dissolving polyamide 4 in a good solvent (A) for polyamide 4 and a solvent (C) which is incompatible with the solution (B),
with a solvent (E) which is a poor solvent for polyamide 4 and is compatible with the good solvent (A) and the solvent (C) .
(2) The production method according to (1), wherein the emulsified liquid (D) further comprises a surfactant.
(3) The production method according to (1) or (2), wherein a volume average diameter of the polyamide 4 particles is 10 µm to 500 µm.

**Effect of the Invention**

The production method of the present invention may provide a practical method for producing polyamide 4 particles.

**Mode of Carrying Out the Invention**

(Polyamide 4 and polyamide 4 particles)

The "polyamide 4" used in the production method of the present invention is a polymer obtained by polymerizing 2-pyrrolidone. The weight average molecular weight (Mw) of the polyamide 4 is not particularly limited, but 5,000 to 1,000,000, 10,000 to 1,000,000, 10,000 to 500,000, 10,000 to 100,000, or the like may be selected. The molecular weight distribution of the polyamide 4 is not particularly limited, but the ratio of weight average molecular weight/number average molecular weight (Mw/Mn) may be selected to be more than 1.0 and 5.0 or less, more than 1.0 and 4.5 or less, more than 1.0 and 4.0 or less, more than 1.0 and 3.5 or less, more than 1.0 and 3.0 or less, or the like. The weight average molecular weight and the number average molecular weight are values obtained by converting the data measured by gel permeation chromatography (GPC) using hexafluoroisopropanol as a solvent, based on the molecular weight of standard polymethylmethacrylate. Polyamide 4 may be produced by polymerizing 2-pyrrolidone by a known polymerization method. A commercially available product may be used for 2-pyrrolidone.

The "polyamide 4 particles" produced by the production method of the present invention are particles of polyamide 4 obtained by polymerizing 2-pyrrolidone. The volume average diameter of the polyamide 4 particles is not particularly limited as long as it falls within the category of fine particles, but 10 µm to 500 µm, 10 µm to 400 µm, 10 µm to 300 µm, 10 µm to 200 µm, 20 µm to 200 µm, 30 µm to 200 µm, 40 µm to 200 µm, 50 µm to 200 µm, or the like may be selected. The volume average diameter of the polyamide 4 particles may be determined by a laser diffraction/scattering particle size distribution analyzer LA-960 (manufactured by Horiba Ltd.) after mixing the produced polyamide 4 particles with water and ultrasonically dispersing them. The CV (coefficient of variation) of the polyamide 4 particles of the present invention may be calculated by the following formula using the values of standard deviation and average particle size in the volume-based particle size distribution.

$$\text{CV (\%)} = ((\text{standard deviation})/ (\text{average particle size})) \times 100$$

(Good solvent A)

The good solvent A used in the present invention means a solvent having a high solubility in polyamide 4. As the good solvent A, formic acid, 1,1,1,3,3,3-hexafluoro-2-propanol, 2,2,2-trifluoroethanol, or the like may be exemplified. These solvents may be used alone or used by combination of two or more thereof.

(Solution B and method for preparing the same)

The solution B used in the present invention is a solution obtained by dissolving the polyamide 4 in the good solvent A. The amounts of the good solvent A and the polyamide 4 are not particularly limited, but an amount of the good solvent A of 0.5 to 20 parts by weight, 0.5 to 15 parts by weight, 0.5 to 10 parts by weight, 1 to 10 parts by weight, or the like with respect to 1 part by weight of the polyamide 4 may be selected. The solution B may be prepared by mixing the good solvent A and the polyamide 4 to dissolve the polyamide 4. The temperature for mixing the good solvent A and the polyamide 4 is not particularly limited, but -20°C to 100°C, 0°C to 80°C, 0°C to 60°C, 0°C to 40°C, or the like may be selected.

(Solvent C)

The solvent C used in the present invention means a solvent that is immiscible with the solution B. As the solvent C, nonpolar solvents may be exemplified. As the non-polar solvent, hydrocarbon solvents such as hexane, octane, decane, dodecane, undecane, tridecane, decalin, 2,2,4,6,6-pentamethylheptane, cyclohexane, decene, isoparaffin, liquid paraffin, kerosene and petroleum ether may be exemplified. These solvents may be used alone or used by combination of two or more thereof. The solvent C used in the present invention also includes a mixed solvent of a solvent compatible with the solution B and a nonpolar solvent incompatible with the solution B, which is not compatible with the solution B.

(Emulsified liquid D and method for producing the same)

The emulsified liquid D used in the present invention is an emulsified liquid obtained by mixing the solution B and the solvent C. The amounts of the solution B and the solvent C contained in the emulsified liquid D are not particularly limited as long as the droplets of the solution B may exist in the solvent C in an emulsified state. Specifically, an amount of 0.5 to 10 parts by weight, 0.5 to 8 parts by weight, 0.5 to 6 parts by weight, or 0.5 to 4 parts by weight of the solvent C with respect to 1 part by weight of the solution B may be selected. The method for preparing the emulsified liquid D is not particularly limited, but a method of adding the solvent C to the solution B and stirring vigorously, and a method of adding the solution B to the solvent C and stirring vigorously may be exemplified.

The emulsified liquid D may comprise other additives. As the other additives, a surfactant may be exemplified. As the surfactant, known surfactants such as anionic surfactant, nonionic surfactant, cationic surfactant and amphoteric surfactant may be used.

As the anionic surfactant, alkyl diphenyl ether disulfonic acid salts such as diammonium dodecyl diphenyl ether disulfonate, sodium dodecyl diphenyl ether disulfonate, calcium dodecyl diphenyl ether disulfonate, sodium alkyl diphenyl ether disulfonate; alkylbenzene sulfonic acid salts such as sodium dodecylbenzene sulfonate, ammonium dodecylbenzene sulfonate; alkyl sulfuric acid ester salts such as sodium lauryl sulfate, ammonium lauryl sulfate; aliphatic carboxylic acid salts such as fatty acid sodium and potassium oleate; polyoxyalkylene unit-containing sulfuric acid ester salts (for example, polyoxyethylene alkyl ether sulfuric acid ester salts such as sodium polyoxyethylene alkyl ether sulfate and ammonium polyoxyethylene alkyl ether sulfate; polyoxyethylene alkyl phenyl ether sulfuric acid ester salts such as sodium polyoxyethylene alkylphenyl ether sulfate, ammonium polyoxyethylene alkyl phenyl ether sulfate; polyoxyethylene polycyclic phenyl ether sulfuric acid ester salts such as sodium polyoxyethylene polycyclic phenyl ether sulfate, ammonium polyoxyethylene polycyclic phenyl ether sulfate); naphthalenesulfonic acid formalin condensate salts such as naphthalenesulfonic acid formalin condensate sodium; alkylsulfosuccinic acid salts such as sodium dialkylsulfosuccinate, disodium monoalkylsulfosuccinate; polyoxyethylene-polyoxypropylene glycol ether sulfates; surfactant having sulfonate or sulfate group and polymerizable carbon-carbon (unsaturated) double bond in the molecule, or the like may be exemplified.

As the nonionic surfactant, polyoxyalkylene unit-containing ether compounds such as polyoxyalkylene alkyl ether compounds such as polyoxyethylene lauryl ether, polyoxyethylene stearyl ether, polyoxyethylene tridecyl ether, polyoxyethylene oleyl ether, polyoxyalkylene alkylphenyl ether compounds such as polyoxyethylene octyl phenyl ether, polyoxyethylene nonyl phenyl ether, polyoxyalkylene polycyclic phenyl ether compounds such as polyoxyethylene polycyclic phenyl ether; polyoxyalkylene alkyl ester compounds such as polyoxyethylene monolaurate, polyoxyethylene monostearate, polyoxyethylene monooleate; polyoxyalkylene alkyl amine compounds such as polyoxyethylene alkyl amines; sorbitan compounds such as sorbitan monolaurate, sorbitan monostearate, sorbitan trioleate, polyoxyethylene sorbitan monolaurate, polyoxyethylene sorbitan monooleate, or the like may be exemplified.

As the cationic surfactant, dodecyltrimethylammonium chloride, tetradecyldimethylbenzylammonium chloride, tetradecyltrimethylammonium chloride, hexadecyltrimethylammonium chloride, octadecyltrimethylammonium chloride, didodecyldimethylammonium chloride, ditetradecyldimethylammonium chloride, dihexadecyldimethylammonium chloride, dioctadecyldimethylammonium chloride, dodecylbenzyldimethylammonium chloride, hexadecylbenzyldimethylammonium chloride, octadecylbenzyldimethylammonium chloride, palmityltrimethylammonium chloride, oleyltrimethylammonium chloride, dipalmitylbenzylmethylammonium chloride, and dioleylbenzylmethylammonium chloride, or the like may be exemplified.

As the amphoteric surfactant, lauryl betaine, lauryl dimethylamine oxide, or the like may be exemplified.

The amount of the surfactant added is not particularly limited, but the amount of the surfactant may be 0.0001 to 0.2 part by weight with respect to 1 part by weight of the solution B.

(Solvent E)

The solvent E used in the present invention is a poor solvent for polyamide 4. The poor solvent for polyamide 4 means a solvent in which the solubility of polyamide 4 is low. Further, the solvent E is a solvent compatible with the good solvent A and the solvent C. As the solvent E, aromatic hydrocarbon solvents such as benzene, toluene, xylene and trimethylbenzene; ether solvents such as diethyl ether, tetrahydrofuran (THF), dioxane and trioxane; ester solvents such as ethyl acetate and isopropyl acetate; ketone solvents such as acetone, methyl ethyl ketone and methyl isobutyl ketone; alcohol solvents such as ethanol, isopropanol, n-butanol, 1-methoxy-2-propanol (PGME) and 1-octanol may be exemplified. These solvents may be used alone or used by combination of two or more thereof. Among them, the solvent E is preferably a mixed solvent of an ether solvent and an alcohol solvent. The amount of the solvent E used is not particularly limited, but the amount of the solvent E may be 1 to 100 parts by weight with respect to 1 part by weight of the emulsified liquid D.

(Method for producing polyamide 4 particles)

In the method for producing polyamide 4 particles according to the present invention, the emulsified liquid (D) is mixed with the solvent (E). The method of mixing the emulsified liquid (D) with the solvent (E) is not particularly limited, but the method of adding the emulsified liquid (D) to the solvent (E) is preferable. The temperature for mixing the emulsified liquid (D) and the solvent (E) is not particularly limited, but -20°C to 100°C, 0°C to 80°C, 0°C to 60°C, 0°C to 40°C, or the like may be selected.

When the emulsified liquid (D) is mixed with the solvent (E), the good solvent (A) and the solvent (C) contained in the emulsified liquid (D) are compatible with the solvent (E) which is a poor solvent for the polyamide 4. Then, the polyamide 4 dissolved in the good solvent (A) is precipitated as polyamide 4 particles. As a result, according to the production method of the present invention, spherical polyamide 4 particles having a specific volume average diameter may be produced.

**Example**

Hereinafter, the present invention will be described in more detail with reference to Example, but the present invention is not limited to the scope of the Example.

Example 1

Polyamide 4 (11.0 g) (Mw = 39,000 Mw/Mn = 3.76) was dissolved in formic acid (22.0 g) to obtain a polyamide 4 solution. Liquid paraffin (57.9 g) and polyoxyethylene (2) stearyl ether (manufactured by FUJIFILM Wako Pure Chemical Co.) (1.0 g) were added to the polyamide 4 solution and the mixture was stirred to obtain an emulsified liquid. Then, the emulsified liquid was added to a stirring mixed solution of tetrahydrofuran (270 g) and 1-octanol (270 g) to precipitate polyamide 4 particles. After filtering off the precipitated polyamide 4 particles, the polyamide 4 particles were obtained by washing and drying. The volume average diameter of the obtained polyamide 4 particles was 109 $\mu$m (CV = 59.9).

The volume average diameter of the polyamide 4 particles was measured using a laser diffraction/scattering particle size distribution analyzer LA-960 (manufactured by HORIBA, Ltd.) after mixing the produced polyamide 4 particles with water and ultrasonically dispersing them.

**Claims**

1. A method for producing polyamide 4 particles comprising:

   mixing an emulsified liquid (D) obtained by mixing a solution (B) obtained by dissolving polyamide 4 in a good solvent (A) for polyamide 4 and a solvent (C) which is incompatible with the solution (B), with a solvent (E) which is a poor solvent for polyamide 4 and is compatible with the good solvent (A) and the solvent (C) .

2. The production method according to claim 1, wherein the emulsified liquid (D) further comprises a surfactant.

3. The production method according to claim 1 or 2, wherein a volume average diameter of the polyamide 4 particles is 10 $\mu$m to 500 $\mu$m.

## INTERNATIONAL SEARCH REPORT

| | International application No. |
|---|---|
| | PCT/JP2019/022192 |

**A. CLASSIFICATION OF SUBJECT MATTER**
Int.Cl. C08J3/14(2006.01)i
According to International Patent Classification (IPC) or to both national classification and IPC

**B. FIELDS SEARCHED**

Minimum documentation searched (classification system followed by classification symbols)
Int.Cl. C08J3/14

| Documentation searched other than minimum documentation to the extent that such documents are included in the fields searched | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2017/195705 A1 (KUREHA CORPORATION) 16 November 2017, claims, examples & EP 3438160 A1, claims, examples | 1-3 |
| A | JP 9-278937 A (TOSOH CORP.) 28 October 1997, claims, paragraphs [0010]-[0017], [0021], examples (Family: none) | 1-3 |
| A | JP 2015-174871 A (TORAY INDUSTRIES, INC.) 05 October 2015, entire text (Family: none) | 1-3 |
| A | JP 2014-105259 A (UBE INDUSTRIES, LTD.) 09 June 2014, entire text (Family: none) | 1-3 |
| A | JP 7-188302 A (KAO CORP.) 25 July 1995, entire text (Family: none) | 1-3 |
| A | JP 5-51465 A (UNITIKA LTD.) 02 March 1993, entire text (Family: none) | 1-3 |

| ☐ | Further documents are listed in the continuation of Box C. | ☐ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 August 2019 (15.08.2019) | 27 August 2019 (27.08.2019) |

| Name and mailing address of the ISA/ Japan Patent Office 3-4-3, Kasumigaseki, Chiyoda-ku, Tokyo 100-8915, Japan | Authorized officer Telephone No. |
|---|---|

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018113421 A
- JP 2016186068 A
- JP 376746 A
- JP 5039355 A
- JP 2015174871 A